Europäisches Patentamt

European Patent Office

Office européen des brevets

(11) Publication number: **0 414 307 A1**

# EUROPEAN PATENT APPLICATION

(21) Application number: 90202210.2

(22) Date of filing: 15.08.90

(51) Int. Cl.5: **C04B 28/02**, B09B 5/00

(30) Priority: 21.08.89 NL 8902106

(43) Date of publication of application:
27.02.91 Bulletin 91/09

(84) Designated Contracting States:
**BE DE FR GB IT NL**

(71) Applicant: PELT & HOOYKAAS B.V.
1 Bijlstraat
NL-3087 AA Rotterdam(NL)

(72) Inventor: Hooykaas, Carel Willem Jan
44, Oranjelaan
NL-3062 BT Rotterdam(NL)

(74) Representative: van der Veken, Johannes
Adriaan et al
EXTERPATENT B.V. P.O. Box 90649
NL-2509 LP 's-Gravenhage(NL)

(54) **Process and plant for processing environmentally harmful waste for storing in a dumping area in the from of hardened blocks provided with markings and hardened blocks containing environmentally harmful waste and being provided with markings.**

(57) A mixture of an environmentally harmful waste, a liquid medium, an aluminium silicate and/or an alumino-silicate, and a cement is hardened to blocks (14) for storing in a dumping area (16).

During hardening the blocks (14) are provided with a marking (9, 9') indicating the type of harmful waste being incorporated in said blocks (14).

The alumino silicate is fly ash and the cement a Portland cement and/or a blast furnace slag cement.

A plant for processing an environmentally harmful waste comprises a medium feed pipe for liquid medium, means for feeding an environmentally harmful waste, a feed pipe (5) for an aluminium silicate and/or alumino-silicate, a binder feed pipe (3) for inorganic binder and a mixer discharge pipe (2), in addition to a dumping area (16) for storing environmentally harmful waste, the mixer discharge pipe opens out into a moulding station comprising containers (11) for moulding hardened blocks (14) and an endless belt (15) for coveying the blocks to a dumping area. The containers (11) for moulding said blocks are provided with marking forming means (12) for forming a marking (9, 9') indicating the type of harmful waste in said blocks.

# PROCESS AND PLANT FOR PROCESSING ENVIRONMENTALLY HARMFUL WASTE FOR STORING IN A DUMPING AREA IN THE FORM OF HARDENED BLOCKS PROVIDED WITH MARKINGS AND HARDENED BLOCKS CONTAINING ENVIRONMENTALLY HARMFUL WASTE AND BEING PROVIDED WITH MARKINGS.

The invention relates to a process for processing environmentally harmful waste for storing in a dumping area by mixing a liquid medium, an environmentally harmful waste, an aluminium silicate and/or alumino-silicate and an inorganic binder, and storing the hardened product formed from this mixture in the above-mentioned dumping area.

Such a process is generally known in practice. In this known process the environmentally harmful waste is mixed as a liquid composition - possibly obtained directly as an industrial liquid waste product or by dissolving or suspending environmentally harmful waste - with an alumino-silicate (such as fly ash and Portland cement), and this mixture is then deposited in a dumping area and allowed to harden therein.

This known process presents the disadvantage that it cannot be established whether or not the end product actually hardens through, for example, substances preventing the hardening of harmful waste occurring in the environment or through a production error being made.

Another disadvantage is that it is not possible to establish in what place a particular processed environmentally harmful waste is situated.

This can be of great importance if, for example, after a longer period of time on the basis of further research the conclusion is reached that the hard mass of such a quantity of environmentally harmful waste present in the dumping area cannot be stored there any longer, and therefore has to be removed or reprocessed using new techniques for recycling of certain substances.

Yet another disadvantage is the fact that the mass balance cannot be checked, so that for inspection bodies it is very difficult to establish whether the total quantity of environmentally harmful waste has in fact formed to a hardened product.

The object of the invention is now to provide a process in which the above-mentioned disadvantages do not occur and in which in particular the mass balance of the environmentally harmful waste brought in can be checked and therefore no waste can be lost in one way or another, while in addition the environmentally harmful waste for storing in the dumping area is in fact present as a hardened end product.

This object is achieved according to the invention in that the above-mentioned mixture is hardened to objects before dumping in a dumping area.

In this way it is possible to check carefully and see that the product for placing in the dumping area is hard, and the mass balance of the whole process is then also extremely easy to check.

It is particularly advantageous for the above-mentioned mixture to be hardened to blocks which are then deposited in the above-mentioned dumping area.

The objects are preferably provided with at least one marking relating to the type of environmentally harmful waste being incorporated in the hardened objects. The marking is for example a number, corresponding to the administrative data with which the different waste materials brought in are registered. This means that different waste materials are easily recognizable even after dumping.

The inorganic binder is expediently a cement, more particularly Portland cement and/or blast furnace slag cement, while the alumino-silicate is expediently fly ash.

The invention also relates to a plant for processing environmentally harmful waste for storing in a dumping area, at least comprising a mixer provided with a medium feed pipe for liquid medium, means for feeding an environmentally harmful waste, a feed pipe for an aluminium silicate and/or alumino-silicate, a binder feed pipe for inorganic binder and a mixer discharge pipe, in addition to a dumping area for storing environmentally harmful waste which is characterized in that the mixer discharge pipe opens out into a moulding station comprising moulding means for moulding hardened objects and conveyor means for conveying the hardened objects to the dumping area.

It is particularly advantageous for the moulds for moulding objects for depositing in a dumping area to be provided with marking-forming means which form at least one marking in or on the object, said marking relating to the type of environmentally harmful waste being incorporated in the hardened objects.

At last the invention relates to a hardened material formed from a mixture of a liquid medium, an environmentally harmful waste, an aluminium silicate and/or alumino silicate and an inorganic binder, being characterized in that the hardened material forms a shaped article.

In a preferred embodiment the shaped article is provided with at least one marking relating to the type of environmentally harmful waste being incorporated in the hardened object, said marking being integral with the hardened object.

The invention will now be explained with reference to an example of an embodiment.

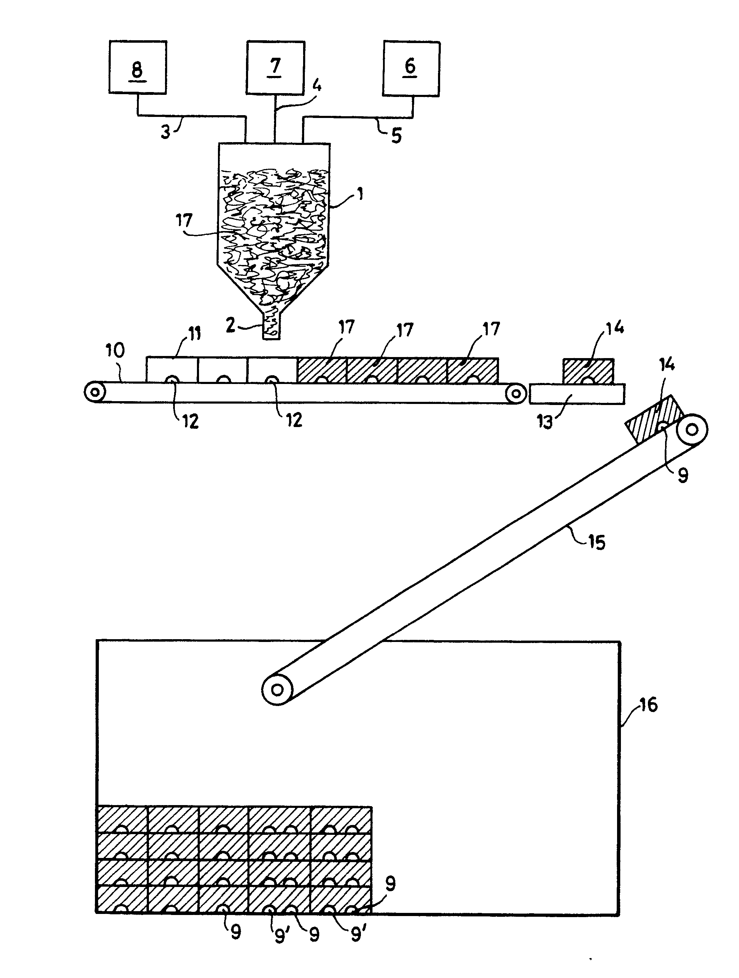

The figure shows a plant for carrying out the process according to the invention.

This plant comprises a mixer 1, provided with a medium feed pipe 4 for feeding in liquid medium containing environmentally harmful waste from stock container 7 for such liquid medium.

A stock container 6 for aluminium silicate and/or alumino-silicate, which is fed to the mixer 1 through another feed pipe 5, is also present.

The inorganic binder is fed to the mixer through binder feed pipe 3 from stock container 8 which contains an inorganic binder such as Portland cement.

After mixing, the mass 17 obtained is discharged through the mixer discharge pipe 2 into containers 11 which are conveyed by an endless belt 10. This belt places the containers on a support 13 where the mass 17 hardens into a set block.

After hardening, the block 14 is removed from the container 11 and is then conveyed on a second endless belt 15 to a dumping area 16, where the blocks 14, containing the environmentally harmful waste, are stored.

In order to ensure that it can be established at any time after storage what environmentally harmful waste is present in a particular block 14, the containers 11 are advantageously provided with marking-forming means 12, so that each block is provided with a marking 9.

Certain containers contain two of such marking-forming means 12 which form two markings 9 and 9′, so that it can be directly established that this is a different environmentally harmful waste. If, in addition, the marking is produced, for example, in the form of a number corresponding to the administrative data with which the different waste materials fed in are registered, it can be checked whether or not the waste materials fed in have actually been fully processed.

EXAMPLE I

A ton of aqueous sludge obtained from a metal finishing industry and containing 10% solids is mixed with 0.3 ton of Portland cement and 1 ton fly ash.

The mixture obtained is first formed into blocks 14 measuring 230 x 150 x 120 cm in containers 11 comprising one marking forming means 12, thereby forming one marking 9. The fluid mass sets to hard blocks in two days. These blocks are then placed in dumping area 16, made up of a closed container which can then be covered at its top side with a waterproof cover, such as plastic sheeting.

EXAMPLE II

Example I is repeated by using an aqueous electroplating waste.

The blocks 14 are provided with two markings 9,9′ by means of a container having two marking forming means 12.

## Claims

1. Process for processing environmentally harmful waste for storing in a dumping area (16) by mixing a liquid medium, an environmentally harmful waste, an aluminium silicate and/or alumino-silicate and an inorganic binder, and storing the hardened product formed from this mixture in the above-mentioned dumping area, characterized in that the mixture is hardened to objects (14) for dumping in a dumping area.

2. Process according to Claim 1, characterized in that the mixture is hardened to blocks (14).

3. Process according to Claim 1 or 2, characterized in that a liquid medium containing environmentally harmful waste is mixed with fly ash and a cement.

4. Process according to Claim 3, characterized in that the cement is Portland cement and/or blast furnace slag cement.

5. Process according to any one of Claims 1 - 4, characterized in that in the hardening step the objects are provided with at least one marking (9, 9′) relating to the type of environmentally harmful waste being incorporated in the hardened objects.

6. Plant for processing environmentally harmful waste for storing in a dumping area (16), at least comprising a mixer (1) provided with a medium feed pipe (4) for liquid medium, means for feeding an environmentally harmful waste, a feed pipe (5) for an aluminium silicate and/or alumino-silicate, a binder feed pipe (3) for inorganic binder and a mixer discharge pipe (2), in addition to a dumping area (16) for storing environmentally harmful waste, characterized in that the mixer discharge pipe (2) opens out into a moulding station comprising moulding means (11) for moulding hardened objects, particularly blocks (14) and conveyor means for conveying the hardened objects (14) to the dumping area (16).

7. Plant according to Claim 6, characterized in that the moulding means are provided with marking-forming means (12) which form at least one marking in or on an object, said marking (9, 9′) relating to the type of environmentally harmful waste being incorporated in the hardened objects.

8. Hardened material formed from a mixture of a liquid medium, an environmentally harmful waste, an aluminium silicate and/or alumino silicate and an inorganic binder, characterized in that the hardened material forms a shaped article (14).

9. Hardened material according to claim 8, characterized in that the shaped article (14) is provided with at least one marking (9, 9′) relating to the type of environmentally harmful waste being incorporated in the hardened object, said marking being integral with the hardened object.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | NL-A-7 407 415   (CROSSFORD POLLUTION SERVICES) <br> * Page 6, lines 13-30; examples 4,8-11,14; claims 1-3 * <br> — — — | 1-4 | C 04 B 28/02 <br> B 09 B 5/00 |
| Y | | 5-9 | |
| Y | NL-A-7 314 116   (TEZUKA KOSAN) <br> * Page 2, paragraphs 2,3; claim 1 * <br> — — — | 6 | |
| Y | DE-A-3 440 994   (RHEINISCHE BRAUNKOHLENWERKE) <br> * Page 10, last line - page 11, line 1; figure, index no. 4 * <br> — — — | 5,7 | |
| A | | 8,9 | |
| Y | DE-A-3 725 749   (RHEINISCHE BAUSTOFFWERKE) <br> * Summary; column 2, line 52 - column * <br> — — — | 8,9 | |
| A | US-A-4 190 372   (TAKAGI et al.) <br> * Summary * <br> — — — | 6 | |
| A | GB-A-2 124 015   (KERNFORSCHUNGSZENTRUM KARLS-RUHE) <br> — — — — — | | |

|  | TECHNICAL FIELDS SEARCHED (Int. Cl.5) |
|---|---|
|  | C 02 F <br> C 04 B <br> C 10 L 5 <br> B 09 B |

The present search report has been drawn up for all claims

| Place of search | Date of completion of search | Examiner |
|---|---|---|
| The Hague | 05 November 90 | KASPERS H.M.C. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document